# EUROPEAN PATENT APPLICATION

(11) **EP 2 259 256 A1**
(43) Date of publication of application: **08.12.2010**
(21) Application number: 09727683.6
(22) Date of filing: 02.04.2009
(51) Int. Cl.: G11B 7/0065, G11B 7/004, G11B 7/09, G11B 7/125, G11B 7/135, G11B 7/24

(54) **VOLUME TYPE INFORMATION RECORDING MEDIUM, INFORMATION RECORDER, INFORMATION REPRODUCER AND OPTICAL PICKUP**

(30) Priority: 04.04.2008 JP 2008098496
(71) Applicant: Sony Corporation, Tokyo 108-0075 (JP)
(72) Inventor: SAITO, Kimihiro, Tokyo 108-0075 (JP); YAMATSU, Hisayuki, Tokyo 108-0075 (JP)
(74) Representative: Carlick, Anthony Julian
(86) International application number: PCT/JP2009/057235
(87) International publication number: WO 2009/123360

(57) **Abstract**

The present invention makes it possible to use an optical pickup in common with conventional optical disks. In a three-dimensional mark recording layer (111v) of a voluminal medium (100v), information is recorded by forming a three-dimensional record mark (RM) in the vicinity of the focus (Fb) of a blue light beam (Lb) according to the blue light beam (Lb) that is concentrated and has a light intensity equal to or larger than a predetermined intensity. The information is reproduced from the three-dimensional mark recording layer (111v) on the basis of a reproducing blue light beam (Lbr) deriving from irradiation of the blue light beam (Lb). A servo layer (114v) of the voluminal medium (100v) reflects at least part of the red light beam (Lr) which is irradiated in order to square the position of the blue light beam (Lb) in the three-dimensional mark recording layer (111v) with an arbitrary target mark position and whose wavelength is different from that of the blue light beam (Lb). The servo layer (114v) is separated by approximately 0.6 mm in the light-axis (Lx) direction of the red light beam (Lr) from the incident surface (100vA) to which the red light beam (Lr) is routed.

## Description

### Technical Field

The present invention relates to a voluminal information recording medium, an information recording apparatus, an information reproducing apparatus, and an optical pickup, and is preferably applied to, for example, a voluminal information recording medium in which information is recorded using a light beam and from which the information is reproduced using the light beam.

### Background Art

In the past, disk-like optical disks have widely prevailed as optical information recording media. In general, a compact disc (CD), a digital versatile disc (DVD), and a Blu-ray Disc (registered trademark, which will be called a BD) are employed.

In the conventional optical disks, the reflectance of a signal recording layer is varied depending on irradiation of a light beam to the signal recording layer exhibiting a predetermined reflectance, whereby a record mark is formed on the signal recording layer in order to record information.

The CD method, DVD method, and BD method are different from one another in terms of the wavelength of an employed light beam, the numerical aperture of an objective lens, or the thickness of a cover layer. An optical pickup that records or reproduces information in or from the conventional optical disks of different types is generally widely used.

An optical disk drive compatible with such an optical disk is designed to record various pieces of information, which include various kinds of contents including a musical content and a video content, and various data items for computers, on the optical disk. In recent years, an amount of information has increased along with the tendency to high-definition pictures or high-quality music, and an increase in the number of contents to be recorded in one optical disk has been requested. Therefore, there is a demand for a further increase in the recording capacity of the optical disk.

As one of techniques for increasing the recording capacity of the optical disk, a voluminal recording medium in which information equivalent to pieces of information in multiple layers is recorded in one three-dimensional mark recording layer, which has a thickness, by forming multiple record marks in the thickness direction of the optical disk so that the record marks will be superposed on one another has been proposed (refer to, for example, patent document 1).
Patent document 1 refers to JP-A-2008-071433.

Incidentally, the conventional optical disks and the voluminal recording medium are, as mentioned above, different from each other in terms of the recording method. An optical pickup capable of recording or reproducing information in or from both the conventional optical disks and voluminal recording medium has not been proposed yet.

### Disclosure of the Invention

The present invention addresses the foregoing point, and is intended to propose a voluminal information recording medium making it possible to use an optical pickup in common with the conventional optical disks, and an information recording apparatus, an information reproducing apparatus, and an optical pickup capable of recording or reproducing information in or from both the conventional optical disks and voluminal recording medium.

In order to solve the aforesaid problem, a voluminal recording medium in accordance with the present invention includes: a recording layer in which information is recorded by forming a three-dimensional record mark in the vicinity of the focus of first light according to the first light, which is concentrated and whose intensity is equal to or larger than a predetermined intensity, and from which the information is reproduced based on returned light deriving from irradiation of the first light; and a reflecting layer that reflects at least part of second light which is irradiated in order to square the position of the first light on the recording layer with an arbitrary position and whose wavelength is different from the wavelength of the first light, and that is separated from an incident surface of the voluminal recording medium, to which the second light is routed, in the light-axis direction of the second light by the same distance as the distance from an incident surface of an optical information recording medium, which is compatible with the second light, to a signal recording layer.

Eventually, similarly to the optical information recording medium compatible with the second light, when the second light is irradiated, the second light can be focused on the reflecting layer. An optical system for use in irradiating the second light can be used in common with the optical information recording medium compatible with the second light.

Further, an information recording apparatus in accordance with the present invention includes: a light irradiation unit that concentrates and irradiates first light and second light whose wavelength is different from the wavelength of the first light; a drive unit that drives the light irradiation unit in a depth direction, in which the light irradiation unit approaches to or recedes from an optical information recording medium, so as to move the first light and second light in the depth direction; a focus shift unit that shifts the focus of the first light in the depth direction by varying the converging state of the first light; and a control unit that controls the drive unit and focus shift unit to focus the first light and second light on positions to which the first light and second light should be irradiated. For a first optical information recording medium having a first signal recording layer compatible with the first light, the control unit focuses the first light on the first signal recording layer according to light returned from the first signal recording layer. For a second optical information recording medium having the second signal recording layer compatible with the second light, the control unit focuses the second light on the second signal recording layer according to light returned from the second signal recording layer. For a voluminal recording medium which has a reflecting layer that reflects at least part of the second light and in which information is recorded as a three-dimensional record mark when the first light whose intensity is equal to or larger than a predetermined intensity is irradiated thereto, the control unit controls the drive unit to focus the second light on the reflecting layer according to light returned from the reflecting layer, and controls the focus shift unit to shift the focus of the first light in the depth direction so as to thus focus the first light on a target depth to which the first light should be irradiated.

Eventually, an optical path along which the first light is irradiated can be used in common between the first optical information recording medium and voluminal recording medium, and an optical path along which the second light is irradiated can be used in common between the second optical information recording medium and voluminal recording medium.

Further, an information reproducing apparatus in accordance with the present invention includes: a light irradiation unit that concentrates and irradiates first light and second light whose wavelength is different from that of the first light; a drive unit that drives the light irradiation unit in a depth direction, in which the light irradiation unit approaches to or recedes from an optical information recording medium, so as to move the first light and second light in the depth direction; a focus shift unit that shifts the focus of the first light in the depth direction by varying the converging state of the first light; and a control unit that controls the drive unit and focus shift unit to focus the first light and second light on positions to which the first light and second light should be irradiated. For a first optical information recording medium having a first signal recording layer compatible with the first light, the control unit focuses the first light on the first signal recording layer according to light returned from the first signal recording layer. For a second optical information recording medium having a second signal recording layer compatible with the second light, the control unit focuses the second light on the second signal recording layer according to light returned from the second signal recording layer. For a voluminal recording medium which has a reflecting layer that reflects at least part of the second light and in which information is recorded as a three-dimensional record mark when the first light whose intensity is equal to or larger than a predetermined intensity is irradiated thereto, the control unit controls the drive unit to focus the second light on the reflecting layer according to light returned from the reflecting layer, and controls the focus shift unit to shift the focus of the first light in the depth direction so as to thus focus the first light on a target depth to which the first light should be irradiated.

Eventually, an optical path along which the first light is irradiated can be used in common between the first optical information recording medium and voluminal recording medium, and an optical path along which the second light is irradiated can be used in common between the second optical information recording medium and voluminal recording medium.

Further, an optical pickup in accordance with the present invention includes: a light irradiation unit that concentrates and irradiates first light and second light whose wavelength is different from that of the first light; a drive unit that drives the light irradiation unit in a depth direction, in which the light irradiation unit approaches to or recedes from an optical information recording medium, so as to move the first light and second light in the depth direction; and a focus shift unit that shifts the focus of the first light in the depth direction by varying the converging state of the first light. For a first optical information recording medium having a first signal recording layer compatible with the first light, the drive unit, the focus shift unit, or the drive unit and focus shift unit focus the first light on the first signal recording layer according to light returned from the first signal recording layer. For a second optical information recording medium having a second signal recording layer compatible with the second light, the drive unit, the focus shift unit, or the drive unit and focus shift unit focus the second light on the second signal recording layer according to light returned from the second signal recording layer. For a voluminal recording medium which has a reflecting layer that reflects at least part of the second light and in which information is recorded as a three-dimensional record mark when the first light whose intensity is equal to or larger than a predetermined intensity is irradiated thereto, the drive unit, the focus shift unit, or the drive unit and focus shift unit control the drive unit to focus the second light on the reflecting layer according to light returned from the reflecting layer, and controls the focus shift unit to shift the focus of the first light in the depth direction so as to focus the first light on a target depth to which the first light should be irradiated.

Eventually, an optical path along which the first light is irradiated can be used in common between the first optical information recording medium and voluminal recording medium, and an optical path along which the second light is irradiated can be used in common between the second optical information recording medium and voluminal recording medium.

According to the present invention, such a volumetric information recording medium that: when second light is irradiated to the volumetric information recording medium in the same manner as it is irradiated to an optical information recording medium compatible with the second light, the second light can be focused on the reflecting layer thereof; an optical system for use in irradiating the second light can be used in common with the optical information recording medium compatible with the second light; and an optical pickup can be used in common with conventional optical disks can be realized.

According to the present invention, an optical path along which first light is irradiated can be used in common between a first optical information recording medium and a voluminal recording medium, and an optical path along which second light is irradiated can be used in common between a second optical information recording medium and the voluminal recording medium. Thus, an optical pickup, an information recording apparatus, and an information reproducing apparatus capable of recording or reproducing information in or from both the conventional optical disks and the voluminal recording medium can be realized.

### Brief Description of the Drawings

Fig. 1 is a schematic diagram showing an appearance of an optical disk;
Fig. 2 is a schematic diagram showing the construction of a DVD medium;
Fig. 3 is a schematic diagram showing the construction of a BD medium;
Fig. 4 includes schematic diagrams showing the construction of a voluminal medium;
Fig. 5 includes schematic diagrams for use in explaining formation of record marks;
Fig. 6 is a schematic diagram showing the configuration of an optical disk drive;
Fig. 7 is a schematic diagram showing the configuration of an optical pickup in accordance with a first embodiment;
Fig. 8 is a schematic diagram for use in explaining recording or reproducing of information in or from a DVD medium;
Fig. 9 is a schematic diagram for use in explaining the construction of an objective lens unit;
Fig. 10 is a schematic diagram for use in explaining recording or reproducing of information in or from a BD medium;
Fig. 11 is a schematic diagram for use in explaining recording or reproducing of information in or from a voluminal medium;
Fig. 12 is a schematic diagram showing the configuration of an optical pickup in accordance with the second embodiment;
Fig. 13 is a schematic diagram showing the construction (1) of a voluminal medium in accordance with another embodiment;
Fig. 14 is a schematic diagram showing the construction (2) of a voluminal medium in accordance with another embodiment;
Fig. 15 is a schematic diagram for use in explaining formation of a record mark in accordance with another embodiment; and
Fig. 16 is a schematic diagram showing the construction of an objective lens unit in accordance with another embodiment.

### Best Mode for Carrying Out the Invention

Referring to the drawings, an embodiment of the present invention will be described below.

### (1) First Embodiment

### (1-1) Construction of an optical disk

The present embodiment can cope with an optical disk 100 conformable to any of three methods, that is, a digital versatile disc (DVD) method, a Blu-ray Disc (registered trademark) (BD) method and a voluminal recording method. For convenience' sake, the disks conformable to the methods shall be called a DVD medium 100d, a BD medium 100b, and a voluminal medium 100v respectively.

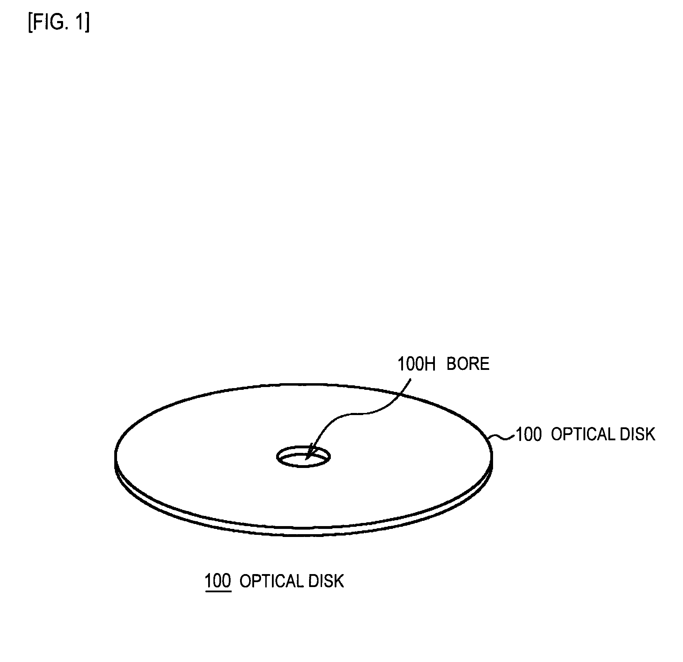

As shown in the appearance diagram of Fig. 1, the optical disk 100 is formed like a disk having a diameter of approximately 120 mm as a whole, and has a bore 100H formed in the center part thereof. The optical disk 100 is formed to have a total thickness t1 as the optical disk 100 of 1.2 mm.

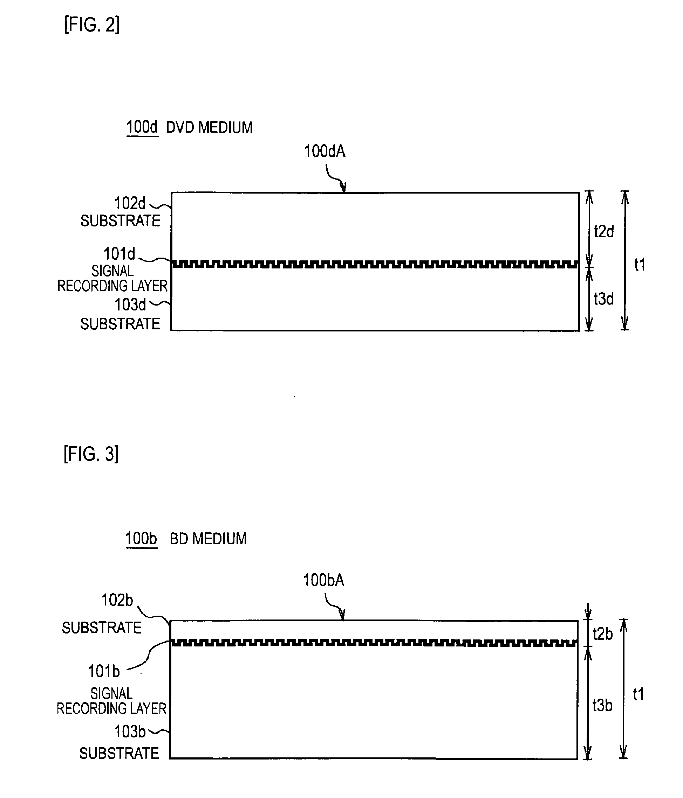

The DVD medium 100d includes, as shown in the sectional diagram of Fig. 2, a signal recording layer 101d in the center thereof, and has the signal recording layer 101d sandwiched between substrates 102d and 103d.

The substrates 102d and 103d have thicknesses t2d and t3d of approximately 0.6 mm, and transmit a red light beam Lr at a high transmittance. In other words, the signal recording layer 101d is located at a position separated by 0.6 mm from an incident surface 100dA to which the red light beam Lr is routed.

When the red light beam Lr ranging from approximately 630 nm to 660 nm is concentrated by an objective lens exhibiting a numerical aperture of approximately 0.6, the red light beam Lr is presumably irradiated to the signal recording layer 101d of the DVD medium 100d.

The signal recording layer 101d is very thin, and reflects the red light beam Lr at a predetermined reflectance. When the reflectance of the signal recording layer 101d is varied along with irradiation of the red light beam Lr, a record mark RM is formed on the signal recording layer 101d in order to record information.

The signal recording layer 101d has guide grooves for tracking servo formed therein. More particularly, spiral tracks are formed with lands, which are convex parts, and grooves which are concave parts. Addresses that are serial numbers are assigned to the tracks at intervals of a predetermined recording unit. A track in or from which information is recorded or reproduced can be specified with the address.

The BD medium 100b includes, as shown in the sectional diagram of Fig. 3, similarly to the DVD medium 100d, a signal recording medium 101b in the center thereof, and has the signal recording layer 101b sandwiched between substrates 102b and 103b.

When a blue light beam Lb having approximately 405 nm is concentrated by an objective lens exhibiting a numerical aperture of approximately 0.85, the blue light beam Lb is presumably irradiated to the signal recording layer 101b of the BD medium 100b.

The signal recording layer 101b is nearly identical to the signal recording layer 101d except that the blue light beam Lb is substituted for the red light beam Lr. An iterative description will be omitted.

The substrates 102b and 103b have thicknesses t2b and t3b of approximately 0.1 mm and 1.1 mm respectively, and transmit the blue light beam Lb at a high transmittance.

The BD medium 100b includes two signal recording layers 101b at mutually close positions (for example, with approximately 25 µm between them), though the layers are not shown.

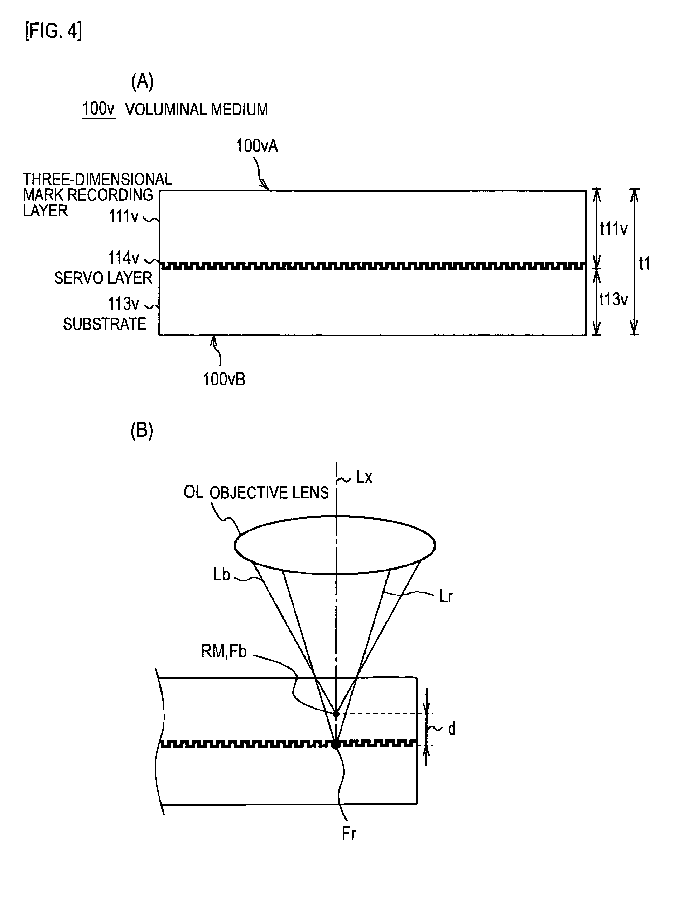

The voluminal medium 100v includes, as shown in the sectional diagram of Fig. 4(A), a servo layer 114v in the center thereof, and has the servo layer 114v sandwiched between a three-dimensional mark recording layer 111v and a substrate 113v.

Incidentally, a disk surface of the voluminal medium 100v on the side of the three-dimensional mark recording layer 111v to which the red light beam Lr is routed shall be called an incident surface 100vA, and a disk surface thereof on the side of the substrate 113v opposite to the incident surface 100vA shall be called a back surface 100vB.

The substrate 113v has a thickness t13v of approximately 0.6 mm, and is made of a hard material exhibiting a high transmittance, for example, polycarbonate or glass so that the substrate 1113v will keep a physical strength for the voluminal medium 100v.

The three-dimensional mark recording layer 111v has a thickness t11v of approximately 0. 6 mm, and separates the servo layer 114 from the incident surface 100vA by approximately 0.6 mm.

The three-dimensional mark recording layer 111v is made of a photopolymer or the like whose reflectance varies depending on an irradiated light intensity, and reacts on the blue light beam Lb having a wavelength of 405 nm. As shown in Fig. 4(B), The three-dimensional mark recording layer 111v is designed so that when the blue light beam Lb having a relatively high intensity is irradiated, a record mark RM will be formed with a bubble in the vicinity of a focus Fb due to thermal reaction or optical reaction.

The voluminal medium 100v includes the servo layer 114v on the interface between the three-dimensional mark recording layer 111v and substrate 113v. The servo layer 114v is formed with a dielectric multilayer film, and reflects a light beam.

The servo layer 114v has, similarly to the signal recording layer 101d of the DVD medium 100d, guide grooves for tracking servo formed therein. Spiral tracks are formed with lands and grooves. Addresses that are serial numbers are assigned to the tracks at intervals of a predetermined recording unit. A track in or from which information is recorded or reproduced can be specified with the address.

When the red light beam Lr having a wavelength of 660 nm is irradiated to the servo layer 114v through the side of the three-dimensional mark recording layer 111v, the servo layer 114v reflects the red light beam toward the three-dimensional mark recoding layer 111v. The light beam reflected at this time shall be called a red reflected light beam LRr.

For example, in an optical disk drive, the red reflected light beam LRr is presumably used to control the position of a predetermined objective lens OL (that is, focus control and tracking control) so that the focus Fb of the blue light beam Lb concentrated by the objective lens OL will coincide with an intended track (hereinafter, called a target track).

In reality, when information is recorded in the voluminal medium 100v, the red light beam Lr is, as shown in Fig. 4(B), concentrated by the objective lens OL whose position is controlled, and focused on a target track of the servo layer 114v.

The blue light beam Lb that shares the same light axis Lx with the red light beam Lr and is concentrated by the objective lens OL is focused on a position equivalent to a desired track in the three-dimensional mark recording layer 111v. At this time, the focus Fb of the blue light beam Lb is located ahead of the focus Fr on the common light axis Lx with the objective lens OL as a reference.

As a result, in the voluminal medium 100v, as shown in Fig. 4(B), a relatively small record mark RM formed with a bubble is recorded at the position of the focus Fb equivalent to a position ahead of the desired track of the servo layer 114v.

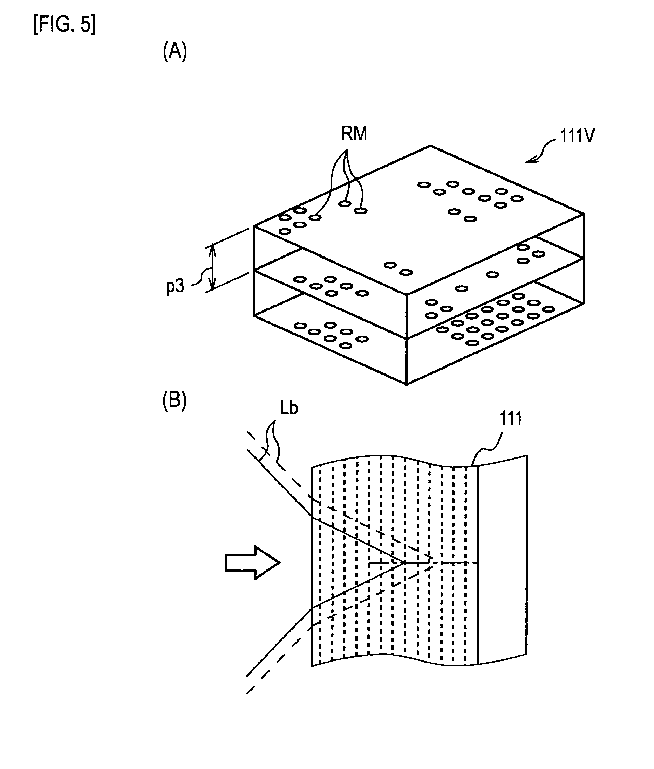

Further, the voluminal medium 100v is designed so that the thickness t11v (= 0.6 mm) of the three-dimensional mark recording layer 111v will be much larger than the height RMh of the record mark RM. Therefore, in the voluminal medium 100v, when the record mark RM is recorded by varying a distance d in the three-dimensional mark recording layer 111v from the servo layer 114v (hereinafter, shall be called a depth), multilayer recording is achieved as if to, as shown in Fig. 5, superpose multiple mark recording layers on one another in the thickness direction of the voluminal medium 100v.

In this case, when the depth d (Fig. 4(B)) of the blue light beam Lb is adjusted in the three-dimensional mark recording layer 111v of the voluminal medium 100v, the depth of the record mark RM is changed. For example, if a distance p3 (Fig. 5(A)) between virtual mark recording layers were set to approximately 15 µm in consideration of mutual interference or the like between record marks RM, approximately forty mark recording layers could be formed in the three-dimensional mark recording layer 111v.

By the way, when information is reproduced from the voluminal medium 100v, similarly to when the information is recorded, the objective lens OL has the position thereof controlled so that the red light beam Lr concentrated by the objective lens OL will be focused on a desired track of the servo layer 114v.

Further, in the voluminal medium 100v, the focus Fb of the blue light beam Lb concentrated via the same objective lens OL is focused on a target mark position that is equivalent to a position ahead of the desired track in the three-dimensional mark recording layer 111v at a target depth.

At this time, the record mark RM recorded at the position of the focus Fb reflects the blue light beam Lb due to a difference in the reflectance. Thus, a reproducing blue light beam Lbr is produced from the record mark RM recorded at the target mark position. The reproducing blue light beam Lbr propagates in a reverse direction of an advancing direction of the blue light beam Lb, that is, from the record mark RM to the side of the incident surface 100vA while diverging.

As mentioned above, when information is recorded in the voluminal medium 100v, the red light beam Lr for position control and the blue light beam Lb for information recording are used to form the record mark RM as information at the focus Fb in the three-dimensional mark recording layer 111v, that is, at a target mark position that is equivalent to a position ahead of a desired track on the servo layer 114v at a target depth.

When recorded information is reproduced from the voluminal medium 100v, the red light beam Lr for position control and the blue light beam Lb for information reproducing are used to generate the reproducing blue light beam Lbr from the record mark RM recorded at the position of the focus Fb, that is, at the target mark position.

### (1-2) Configuration of an optical disk drive

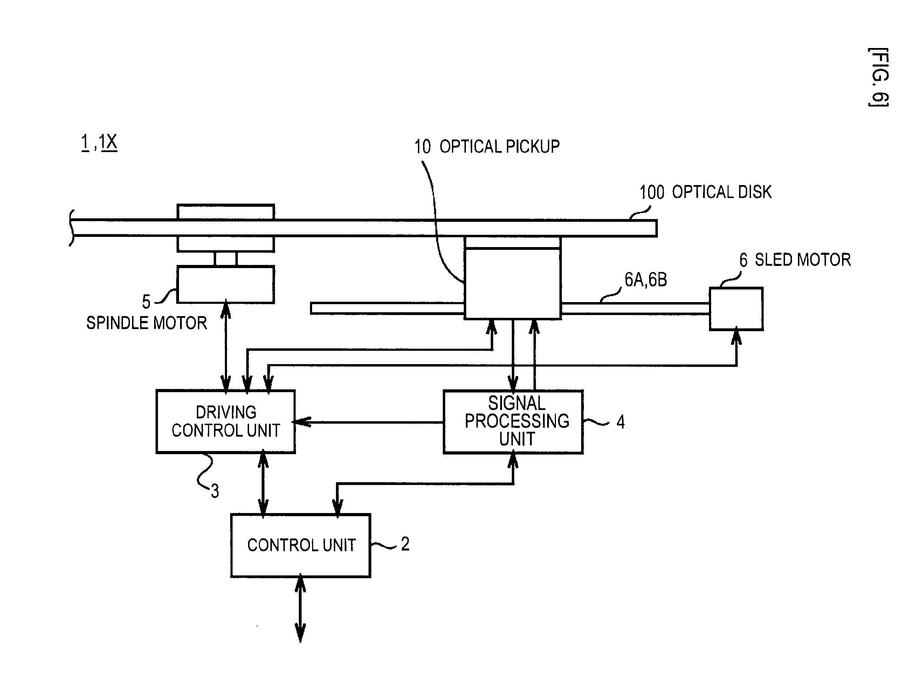

Next, an optical disk drive 1 compatible with the optical disks 100 conformable to the three methods will be described below. The optical disk drive 1 has, as shown in Fig. 6, the whole thereof organized and controlled by a control unit 2.

The control unit 2 is configured with a central processing unit (CPU) that is not shown as a center, reads various programs, which include a basic program and an information recording program, from a read-only memory (ROM) that is not shown, develops the programs in a random access memory (RAM) that is not shown, and thus executes various pieces of processing including information recording processing and information reproducing processing.

For example, when the control unit 2 receives an information recording instruction, record information, or recording address information from external equipment, which is not shown, with the optical disk 100 mounted in the optical disk drive, the control unit 2 feeds the recording address information and a driving instruction to a driving control unit 3, and feeds the record information to a signal processing unit 4. Herein, the recording address information refers to information on an address at which the record information should be recorded.

The driving control unit 3 controls driving of a spindle motor 5 according to a driving instruction so as to rotate the optical disk 100 at a predetermined rotating speed, and also controls driving of a sled motor 6 so as to move the optical pickup 10 to a position, which is consistent with recording address information, in a radial direction of the optical disk 100 (that is, an internal-circumference direction or an external-circumference direction) along moving shafts 6A and 6B.

The signal processing unit 4 produces a record signal by performing various pieces of signal processing, which include predetermined encoding processing and modulating processing, on the fed record information, and feeds the record signal to the optical pickup 10.

The optical pickup 10 performs focus control and tracking control under the control of the driving control unit 3, thus focuses a light beam on a track in the optical disk 100 indicated with the recording address information (that is, a target mark position), and then records the record mark RM according to the record signal sent from the signal processing unit 4 (a full detail will be given later).

When the control unit 2 receives an information reproducing instruction and reproducing address information, which signifies an address of record information, from, for example, external equipment (not shown), the control unit 2 feeds a driving instruction to the driving control unit 3, and feeds a reproducing processing instruction to the signal processing unit 4.

The driving control unit 3 controls driving of the spindle motor 5 in the same manner as it does when recording information so that the optical disk 100 will be rotated at a predetermined rotating speed, and controls driving of the sled motor 6 so that the optical pickup 10 will be moved to a position consistent with the reproducing address information.

The optical pickup 10 performs focus control and tracking control under the control of the driving control unit 3, thus focuses a light beam on a target mark position in the optical disk 100 signified by the reproducing address information, and then irradiates the light beam containing a predetermined amount of light. At this time, the optical pickup 10 detects a reflected light beam, which is reflected from the optical disk 100, and feeds a detection signal, which is consistent with the amount of light, to the signal processing unit 4 (a full detail will be given later).

The signal processing unit 4 produces reproduction information by performing various pieces of signal processing, which include predetermined demodulating processing and decoding processing, on the fed detection signal, and feed the reproduction information to the control unit 2. Accordingly, the control unit 2 transmits the reproduction information to the external equipment (not shown).

As mentioned above, the optical disk drive 1 uses the control unit 2 to control the optical pickup 10, and thus records information at a target mark position in the optical disk 100, or reproduces information from the target mark position.

### (1-3) Configuration of the optical pickup

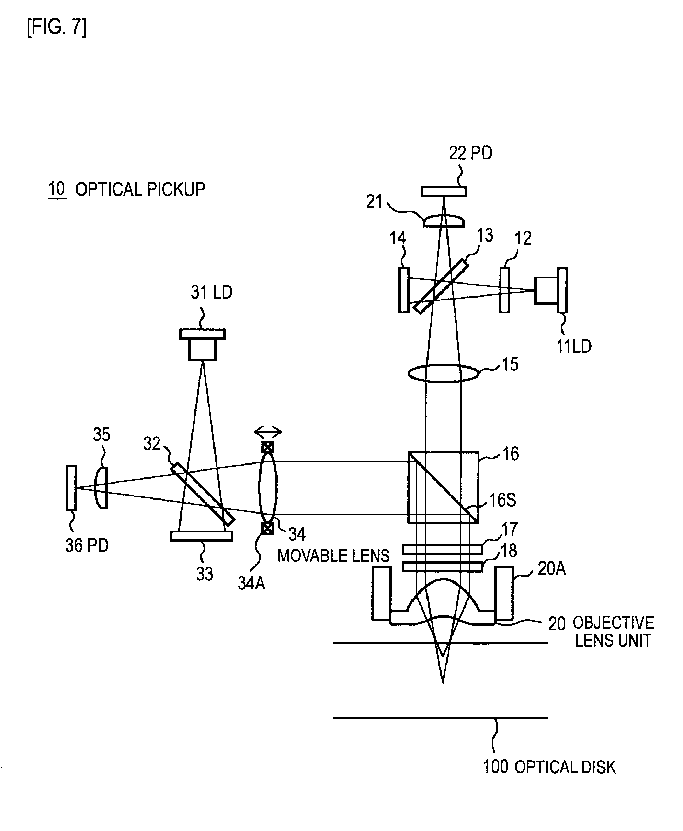

As shown in Fig. 7, the optical pickup 10 irradiates the red light beam Lr, which has a wavelength of 660 nm and is emitted from a laser diode 11, to the optical disk 100, and uses a photodetector 22 to receive the red reflected light beam LRr reflected from the optical disk 100. The optical pickup 10 irradiates the blue light beam Lb, which has a wavelength of 405 nm and is emitted from a laser diode 31, to the optical disk 100, and uses a photodetector 36 to receive the reproducing blue light beam Lbr from the optical disk 100.

The optical pickup 10 irradiates the red light beam Lr to the DVD medium 100d, and irradiates the blue light beam Lb to the BD medium 100b. The optical pickup 10 irradiates both the red light beam Lr and blue light beam Lb to the voluminal medium 100v.

### (3-1) Irradiation of a light beam to the DVD medium

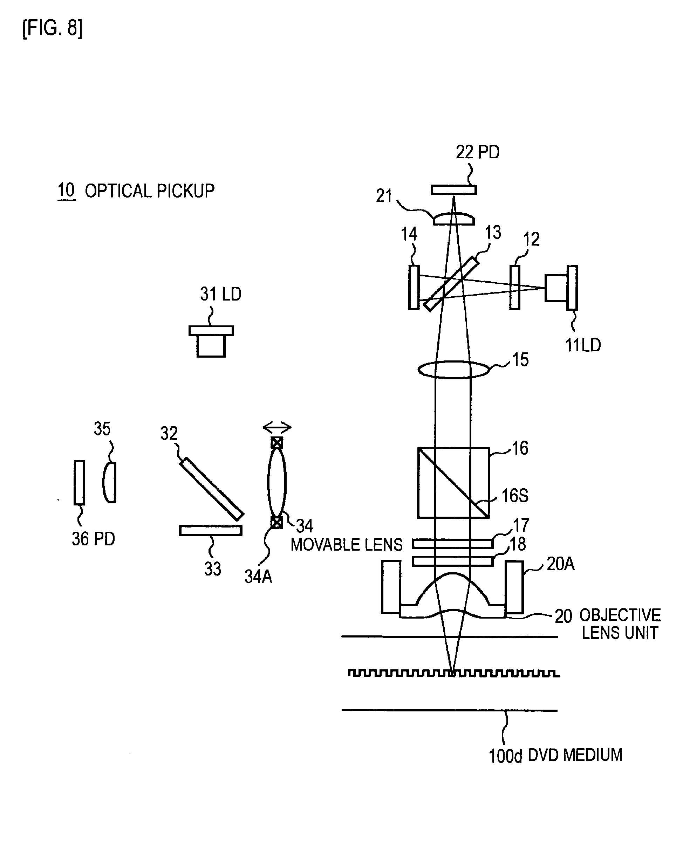

As shown in Fig. 8, the laser diode 11 of the optical pickup 10 emits the red light beam Lr by an amount of light, which is consistent with a driving current fed from the control unit 2, and routes the red light beam Lr to a grating 12.

The grating 12 separates the red light beam Lr into a main beam, which is used to reproduce or record data from or in the optical disk 100, and sub beams to be used to produce various kinds of tracking control signals, and routes the main beam and sub beams as the red light beam Lr to a polarization beam splitter 13.

The polarization beam splitter 13 reflects or transmits a light beam at a ratio that varies depending on a direction of polarization of the light beam. The polarization beam splitter 13 reflects a majority of the incident red light beam Lr that is s-polarized light, and routes the majority to a collimator lens 15. The collimator lens 15 converts the red light beam Lr, which is routed as diverging rays, into parallel rays, and routes the parallel rays to a dichroic prism 16.

The dichroic prism 16 uses a reflecting and transmitting surface 16S to transmit or reflect a light beam according to the wavelength of the light beam, transmits the red light beam Lr having a wavelength of approximately 660 nm, and reflects the blue light beam Lb having a wavelength of approximately 405 nm. The reflecting and transmitting surface 16S transmits the red light beam Lr and routes it to a liquid crystal element 17.

The liquid crystal element 17 corrects a spherical aberration of a light beam according to an applied voltage under the control of the control unit 2. The correction of the spherical aberration is executed for the blue light beam Lb whose spherical aberration is strictly restricted, but is not executed for the red light beam Lr.

The liquid crystal element 17 transmits the red light beam Lr without any change, and routes the red light beam Lr to a quarter-wave plate 18. The quarter-wave plate 18 converts the red light beam Lr, which is s-polarized light, into circularly polarized light, and routes the circularly polarized light to an objective lens unit 20.

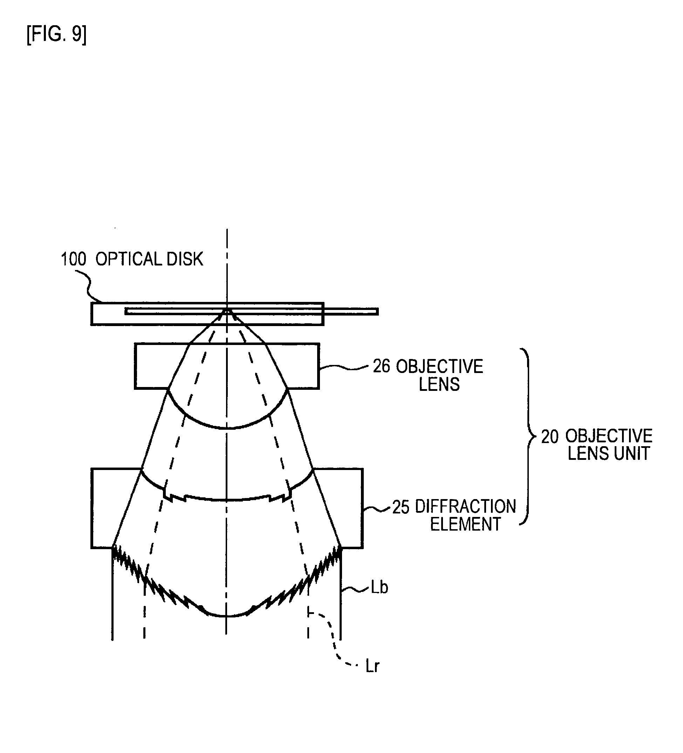

As shown in Fig. 9, the objective lens unit 20 includes a diffraction element 25 and an objective lens 26. The diffraction element 25 applies a spherical aberration to a light beam according to the wavelength of the light beam so that the objective lens 26 will act as a lens exhibiting a numerical aperture associated with the wavelength of the light beam.

The diffraction element 25 converts the red light beam Lr to converging rays according to the wavelength of the red light beam Lr, and routes the converging rays to the objective lens 26. The objective lens 26 concentrates the red light beam Lr, and irradiates the red light beam Lr to the DVD medium 100d. At this time, the objective lens 26 acts as a lens, which exhibits a numerical aperture of approximately 0.6, according to the converging state of the red light beam Lr, and irradiates the red light beam Lr to the signal recording layer 101d.

The objective lens 26 is designed to make the spherical aberration of the red light beam Lr nearly null on the signal recording layer 101d, and irradiates the red light beam Lr, which is nearly devoid of the spherical aberration, to the signal recording layer 101d.

The objective lens 26 receives the red reflected light beam LRr having the red light beam Lr reflected from the DVD medium 100d, and routes the red reflected light beam LRr to the quarter-wave plate 18. The quarter-wave plate 18 converts the reflected light, which is circularly polarized light, into p-polarized light that is linearly polarized light, and routes the p-polarized light to the polarization beam splitter 13 by way of the liquid crystal element 17, dichroic prism 16, and collimator lens 15.

The polarization beam splitter 13 transmits the incident red reflected light beam LRr, and routes the red reflected light beam LRr to a cylindrical lens 21. The cylindrical lens 21 applies an astigmatism to the red reflected light beam LRr, and routes the resultant light beam to the photodetector 22.

The photodetector 22 has multiple detection areas, receives and photoelectrically converts the main beam and sub beams of the red reflected beam LRr so as to produce a detection signal representing amounts of light received in the respective detection areas, and feeds the signal to the signal processing unit 4 (Fig. 6).

The signal processing unit 4 produces a tracking error signal, which represents a magnitude of deviation in a tracking direction of the red light beam Lr from a target mark position, on the basis of the detection signal according to, for example, a three-spot method, and feeds the signal to the driving control unit 3.

The signal processing unit 4 produces a focus error signal, which represents a magnitude of deviation in a focusing direction of the red light beam Lr from a target mark position, on the basis of the detection signal according to an astigmatism method, and feeds the signal to the driving control unit 3.

The driving control unit 3 controls a biaxial actuator 20A on the basis of the tracking error signal and focus error signal, and displaces the objective lens unit 20 so as to shift the focus Fr of the red light beam Lr, and focuses the red light beam Lr on the target mark position (that is, a target track on the signal recording layer 101d).

Further, the polarization beam splitter 13 uses the polarizing surface thereof to separate part of the red light beam Lr from the red light beam Lr by transmitting the part of the red light beam at a predetermined ratio of amounts of light, and routes the part of the red light beam to an automatic power control (APC) photodetector 14. The APC photodetector 14 detects the amount of light of the incident red light beam Lr, produces an APC detection current having a current value consistent with the amount of light, and feeds the current to the control unit 2.

The control unit 2 increases or decreases a driving current, which is fed to the laser diode 11, so that the APC detection current will have a predetermined current value, and thus regulates the output of the laser diode 11. Eventually, the intensity of the red light beam Lr emitted from the laser diode 11 is controlled to have a predetermined value suitable for information reproducing processing and information recording processing.

### (1-3-2) Irradiation of a light beam to the BD medium

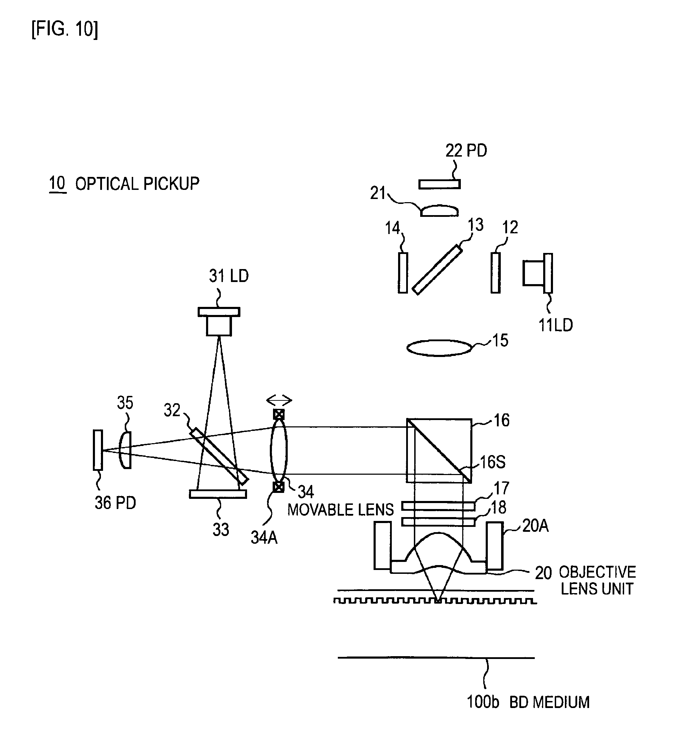

As shown in Fig. 10, for reproducing or recording information from or in the BD medium 100b, the optical pickup 10 irradiates the blue light beam Lb, which is emitted from the laser diode 31, to the BD medium 100b.

More particularly, the laser diode 31 of the optical pickup 10 emits the blue light beam Lb by an amount of light consistent with a driving current fed from the control unit 2, and routes the blue light beam to a polarization beam splitter 32.

The polarization beam splitter 32 reflects or transmits a light beam at a ratio that varies depending on a direction of polarization of the light beam. The polarization beam splitter 32 transmits a majority of the incident blue light beam Lb which is p-polarized light, and routes the majority to a movable lens 34.

When an actuator 34A is driven under the control of the control unit 2, the movable lens 34 is moved in the light-axis direction of the blue light beam Lb. The movable lens 34 can vary the converging state of the blue light beam Lb according to the distance from the laser diode 31.

The control unit 2 moves the movable lens 34 to a position, at which the blue light beam Lb can be converted into parallel rays, during information reproducing processing or information recording processing executed for the BD medium 100b, and thus allows the movable lens 34 to act as a collimator lens.

The movable lens 34 converts the blue light beam Lb, which has entered as diverging rays, into parallel rays, and routes the parallel rays to the dichroic prism 16.

The dichroic prism 16 uses the reflecting and transmitting surface 16S thereof to transmit the blue light beam Lb according to the wavelength, and routes the blue light beam to the liquid crystal element 17.

At this time, the control unit 2 (Fig. 6) applies a voltage to the liquid crystal element 17 according to the signal recording layer 101b that is an object of irradiation of a light beam, corrects a spherical aberration that depends on the position in the signal recording layer 101b separated from the surface of the BD medium 100b, and routes the resultant light beam to the quarter-wave plate 18.

The quarter-wave plate 18 converts the blue light beam Lb, which is p-polarized light, into circularly polarized light, and routes the circularly polarized light to the objective lens unit 20.

The diffraction element 25 of the object lens unit 20 converts the blue light beam Lb into converging rays according to the wavelength of the blue light beam, and routes the converging rays to the objective lens 26. The objective lens 26 concentrates the blue light beam Lb, and irradiates the blue light beam to the BD medium 100b. At this time, the objective lens 26 acts as a lens that exhibits a numerical aperture of approximately 0.85 according to the converging state of the blue light beam Lb, and irradiates the blue light beam Lb to the signal recording layer 101b.

The objective lens 26 receives the reproducing blue light beam Lbr having the blue light beam Lb reflected from the DVD medium 100d, and routes the reproducing blue light beam Lbr into the quarter-wave plate 18. The quarter-wave plate 18 converts the reproducing blue light beam Lbr, which is circularly polarized light, into p-polarized light that is linearly polarized light, and routes the circularly polarized light to the polarization beam splitter 32 by way of the liquid crystal element 17, dichroic prism 16, and movable lens 34.

The polarization beam splitter 32 transmits the incident reproducing blue light beam Lbr according to a direction of polarization, and routes the resultant light beam to the cylindrical lens 35. The cylindrical lens 35 applies an astigmatism to the reproducing blue light beam Lbr, and routes the resultant light beam to the photodetector 36.

The photodetector 36 has multiple detection areas, receives and photoelectrically converts the reproducing blue light beam Lb so as to produce a detection signal representing amounts of light received in the respective detection areas, and feeds the detection signal to the signal processing unit 4 (Fig. 6).

The signal processing unit 4 produces a tracking error signal on the basis of the detection signal according to, for example, a one-spot method, and feeds the signal to the driving control unit 3. The signal processing unit 4 produces a focus error signal on the basis of the detection signal according to an astigmatism method, and feeds the signal to the driving control unit 3.

The driving control unit 3 controls the biaxial actuator 20A on the basis of the tracking error signal and focus error signal, displaces the objective lens unit 20 so as to shift the focus Fb of the blue light beam Lb, and focuses the blue light beam Lb on a target mark position (that is, a target track on the signal recording layer 101d).

Further, the polarization beam splitter 32 uses the polarizing surface thereof to transmit part of the blue light beam Lb at a predetermined ratio of amounts of light, thus separates the part of the blue light beam, and routes the part of the blue light beam to the APC photodetector 33. The APC photodetector 33 detects the amount of light of the incident blue light beam Lb, produces an APC detection current having a current value consistent with the amount of light, and feeds the current to the control unit 2.

The control unit 2 increases or decreases a driving current, which is fed to the laser diode 11, so that the APC detection current will have a predetermined current value, and thus regulates the output of the laser diode 11. Eventually, the intensity of the blue light beam Lb emitted from the laser diode 11 is controlled to have a predetermined value suitable for information reproducing processing and information recording processing.

### (1-3-3) Irradiation of a light beam to the voluminal medium

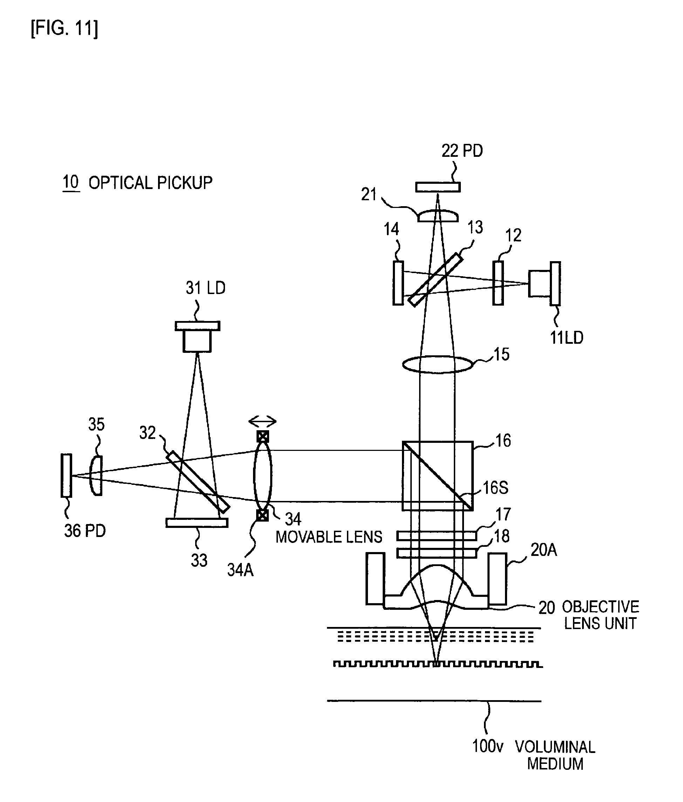

As shown in Fig. 11, for executing information reproducing processing or information recording processing for the voluminal medium 100v, the optical pickup 10 irradiates the red light beam Lr emitted from the laser diode 11 and the blue light beam Lb emitted from the laser diode 31 to the voluminal medium 100v.

### (1-3-3-1) Irradiation of the red light beam

The laser diode 11 of the optical pickup 10 emits the red light beam Lr under the control of the control unit 2, and routes the red light beam to the objective lens unit 20 by way of the grating 12, polarization beam splitter 13, collimator lens 15, dichroic prism 16, liquid crystal element 17, and quarter-wave plate 18 in the same manner as it does during information reproducing processing or information recording processing executed for the DVD medium 100d.

The objective lens unit 20 allows the objective lens 26 to act as a lens, which exhibits a numerical aperture of approximately 0.6, due to the action of the diffraction element 25, and irradiates the light beam to the voluminal medium 100v.

As described previously in conjunction with Fig. 4, the voluminal medium 100v has, similarly to the DVD medium 100d, the servo layer 114v separated by approximately 0.6 mm from the incident surface 100vA to which the red light beam Lr is routed.

The optical pickup 10 irradiates the red light beam Lr, which is nearly devoid of a spherical aberration, to the servo layer 114v in the same manner as it does for the DVD medium 100d.

The objective lens 26 receives the red reflected light beam LRr having the red light beam Lr reflected from the servo layer 114v, and irradiates the red reflected light beam LRr to the photodetector 22 by way of the quarter-wave plate 18, liquid crystal element 17, dichroic prism 16, collimator lens 15, polarization beam splitter 13, and cylindrical lens 21.

The optical pickup 10 drives the objective lens unit 20 on the basis of a received amount of light of the red reflected light beam LRr, which is received by the photodetector 22, in the same manner as it does for the DVD medium 100d, and thus focuses the red light beam Lr on a desired track on the servo layer 114v. As a result, the optical pickup 10 moves the objective lens unit 20 so that the red light beam Lr will be focused on the servo layer 114v.

The optical pickup 10 adjusts the light intensity of the red light beam Lr, which is emitted from the laser diode 11, under the control of the control unit 2 in the same manner as it does for the DVD medium 100d, so that the light intensity will be set to a predetermined value.

As mentioned above, the optical pickup 10 irradiates the red light beam Lr, which is emitted from the laser diode 11, to the servo layer 114v, and drives the objective lens unit 20 on the basis of the red reflected light beam LRr. Thus, the optical pickup 10 focuses the red light beam Lr on the servo layer 114v by moving the objective lens unit 20.

### (1-3-3-2) Irradiation of the blue light beam

The laser diode 31 of the optical pickup 10 emits the blue light beam Lb under the control of the control unit 2, and routes the blue light beam to the objective lens unit 20 by way of the polarization beam splitter 32, movable lens 34, dichroic prism 16, liquid crystal element 17, and quarter-wave plate 18 in the same manner as it does during information reproducing processing or information recording processing executed for the BD medium 100b.

The position of the focus Fb of the blue light beam Lb1 emitted from the objective lens unit 20 depends on the converging state of the blue light beam emitted from the movable lens 34. Namely, the focus Fb shifts in the depth direction of the voluminal medium 100v within the three-dimensional mark recording layer 111v according to the position of the movable lens 34.

In reality, in the optical pickup 10, the position of the movable lens 34 is controlled by the control unit 2, whereby the depth d (that is, the distance from the servo layer 114v) of the focus Fb (Fig. 4(B)) of the blue light beam Lb1 in the three-dimensional mark recording layer 111v of the voluminal medium 100v is adjusted. Thus, the focus Fb is squared with a target mark position to which the blue light beam Lb should be irradiated.

In the optical pickup 10, when recording processing of recording information is executed for the voluminal medium 100v, similarly to when recording processing is executed for the BD medium 100b, the light intensity of the red light beam Lr emitted from the laser diode 31 is adjusted under the control of the control unit 2 so that the light intensity will be set to a predetermined value suitable for the recording processing. As a result, the blue light beam Lb takes on a light intensity, which is equal to or larger than the predetermined light intensity, in the vicinity of the focus Fb, and forms the record mark RM at the focus Fb.

For information reproducing processing of reading information recorded in the optical disk 100, if the record mark RM is recorded at the focus Fb, the blue light beam Lb1 concentrated on the focus Fb is reflected as the reproducing blue light beam Lbr from the record mark RM, and routed to the objective lens unit 20.

The objective lens unit 20 receives the reproducing blue light beam Lbr, and irradiates the light beam to the photodetector 36 by way of the quarter-wave plate 18, liquid crystal element 17, dichroic prism 16, movable lens 34, polarization beam splitter 32, and cylindrical lens 35.

The photodetector 36 produces a detection signal consistent with a received amount of light of the reproducing blue light beam Lbr, and feeds the detection signal to the signal processing unit 4.

As mentioned above, the optical pickup 10 irradiates the blue light beam Lb1 via the objective lens unit 20 that is servo-controlled based on the red light beam Lr, and thus squares the tracking direction of the focus Fb of the blue light beam Lb1 with a target mark position. Further, the optical pickup 10 adjusts the depth d of the focus Fb according to the position of the movable lens 34, and thus squares the focusing direction of the focus Fb with the target mark position.

### (1-4) Actions and advantage

In the foregoing constitution, information is recorded in the three-dimensional mark recording layer 111v of the voluminal medium 100v by forming the three-dimensional record mark RM in the vicinity of the focus Fb of the blue light beam Lb according to the blue light beam Lb that is first light which is concentrated and has a light intensity equal to or larger than a predetermined intensity. The information is reproduced from the three-dimensional mark recording layer 111v on the basis of the reproducing blue light beam Lbr that is returned light deriving from irradiation of the blue light beam Lb.

The servo layer 114v of the voluminal medium 100v reflects at least part of the red light beam Lr which is irradiated in order to square the position of the blue light beam Lb in the three-dimensional mark recording layer 111v with an arbitrary target mark position and whose wavelength is different from that of the blue light beam Lb. The servo layer 114v is separated from the incident surface 100vA, to which the red light beam Lr is routed, by the same distance as the distance from the incident surface 100dA of the DVD medium 100d, which is an optical information recording medium compatible with the red light beam Lr, to the signal recording layer 101d in the direction of the light axis Lx of the red light beam Lr.

When the red light beam Lr is concentrated on the voluminal medium 100v in the same manner as it is on the DVD medium 100d, the red light beam Lr is irradiated to the servo layer 114v of the voluminal medium 100v.

In other words, when the red light beam Lr is irradiated to the voluminal medium 100v via an objective lens which exhibits the same numerical aperture as that for the DVD medium 100d, the spherical aberration of the red light beam at the focus Fr can be made nearly null.

As a result, the voluminal medium 100v allows the optical pickup 10, which irradiates the red light beam Lr and blue light beam Lb to the voluminal medium 100v, to use one optical system in common as the optical system for irradiating the red light beam Lr to the servo layer 114v and the optical system for irradiating the red light beam Lr to the DVD medium 100d.

The voluminal medium 100v has a thickness of approximately 1.2 mm as the thickness from the incident surface 100vA to the back surface 100vB opposite to the incident surface.

The total thickness t1 of the voluminal medium 100v is identical to the total thickness t1 of a general-purpose optical disk 100 such as the DVD medium 100d or BD medium 100b. As a result, the voluminal medium 100v does not require drastic modification of the optical pickup 10 in terms of the driving range for the objective lens 26 and other points. The number of points in which the optical pickup 10 should be modified relative to a conventional optical pickup can be decreased.

The servo layer 114v of the voluminal medium 100v has grooves and lands spirally formed therein in order to create guide grooves for use in indicating positions in the servo layer 114v.

Therefore, when the optical pickup 10 implements focus control and tracking control for the voluminal medium 100v in the same manner as it does for the DVD medium 100d, the optical pickup 10 can focus the red light beam Lr on a desired track in the servo layer 114v.

Since the record mark RM is formed with a bubble in the three-dimensional mark recording layer 111v of the voluminal medium 100v, the record mark RM can be formed merely by causing the optical pickup 10 to irradiate the blue light beam Lb to one side of the voluminal medium. For the voluminal medium 100v, the optical pickup may have nearly the same configuration as a conventional optical pickup, which records or reproduces information in or from the DVD medium 100d or BD medium 100b, except that the optical pickup includes the movable lens 34 which shifts the focus of the blue light beam Lb. Eventually, the configuration of the optical pickup 10 can be simplified.

The optical pickup 10 that records or reproduces information in or from the voluminal medium 100v includes the objective lens unit 20 that serves as a light irradiation unit which concentrates the blue light beam Lb and red light beam Lr and irradiates the light beams to the voluminal medium 100v.

The optical pickup 10 drives the biaxial actuator 20A in the depth direction (that is, a focusing direction), in which the objective lens unit 20 approaches to or recedes from the optical disk 100, under the control of the control unit 2, and thus moves the blue light beam Lb and red light beam Lr in the depth direction. Further, the optical pickup 10 displaces the movable lens 34 under the control of the control unit 2 so as to vary the converging state of the blue light beam Lb, and thus shifts the focus of the blue light beam Lb in the depth direction.

For the BD medium 100b serving as a first optical information recording medium and including the signal recording layer 101b that serves as a first signal recording layer compatible with the blue light beam Lb, the optical pickup 10 controls the biaxial actuator 20A to focus the blue light beam Lb on the signal recording layer 101b according to the reproducing blue light beam Lbr returned from the signal recording layer 101b.

For the DVD medium 100d serving as a second optical information recording medium and including the signal recording layer 101d that serves as a second signal recording layer compatible with the red light beam Lr, the optical pickup 10 controls the biaxial actuator 20A to focus the red light beam Lr on the signal recording layer 101d according to the red reflected light beam LRr returned from the signal recording layer 101d.

For the voluminal medium 100v serving as a voluminal recording medium, the optical pickup 10 controls the biaxial actuator 20A to focus the red light beam Lr on the reflecting layer according to the red reflected light beam LRr returned from the servo layer 114v. The optical pickup 10 controls the movable lens 34 to shift the focus Fb of the blue light beam Lb in the depth direction so as to thus focus the blue light beam Lb on a target depth to which the blue light beam Lb should be irradiated.

The optical pickup 10 irradiates the blue light beam Lb in the same manner as it irradiates the blue light beam Lb to the BD medium 100b, though it uses the movable lens 34 to displace the focus Fb. The optical pickup 10 irradiates the red light beam Lr in the same manner as it irradiates the red light beam Lr to the DVD medium 100d. Thus, the optical pickup 10 can perform information recording processing and information reproducing processing on the voluminal medium 100v.

The optical pickup 10 can use one optical path in common as the optical path for the blue light beam Lb to be irradiated to the BD medium 100b and the optical path for the blue light beam Lb to be irradiated to the voluminal medium 100v, and can use one optical path in common as the optical path for the red light beam Lr to be irradiated to the DVD medium 100d and the optical path for the red light beam Lr to be irradiated to the voluminal medium 100v.

As a result, the optical pickup 10 can execute recording or reproducing of information in or from the voluminal medium 100v without the necessity of drastically modifying the configuration of a conventional optical pickup that records or reproduces information in or from the BD medium 100b or DVD medium 100d.

The objective lens unit 20 that is included in the optical pickup 10 and that concentrates the red light beam Lr and blue light beam Lb and irradiates the light beams to the optical disk 100 is realized with a combination of the diffraction element 25 and objective lens 26 that vary the converging states of the red light beam Lr and blue light beam Lb according to the wavelengths of the red light beam Lr and blue light beam Lb.

Since the optical pickup 10 can irradiate the red light beam Lr and blue light beam Lb to the optical disks 100 using only the objective lens 26, the configuration of the optical pickup 10 can be simplified. The optical pickup 10 can prevent various problems that are derived from use of multiple objective lenses and include, for example, a problem that the positions of irradiation of sub beams are deviated from one another.

Further, the optical pickup 10 displaces the movable lens 34, which is disposed among diverging rays, in the light-axis direction of the blue light beam Lb so as to vary the converging state of the blue light beam Lb, and thus shifts the focus Fb of the blue light beam Lb in the depth direction.

Therefore, the optical pickup 10 can displace the focus Fb of the blue light beam Lb independently of displacement of the objective lens unit 20.

According to the foregoing constitution, in the voluminal medium 100v, the servo layer 114v is, similarly to the signal recording layer 101d of the DVD medium 100d, formed at a position separated by 0.6 mm from the incident surface 100vA of the voluminal medium. Therefore, when the red light beam Lr identical to the red light beam Lr to be irradiated to the DVD medium 100d is irradiated to the voluminal medium 100v, the spherical aberration suffered by the red light beam Lr can be nearly nullified.

As a result, in the voluminal medium 100v, the optical pickup 10 can focus the red light beam Lr on the servo layer 114v by merely irradiating the red light beam Lr in the same manner as it does to the DVD medium 100d. In the voluminal medium 100v, the record mark RM is recorded or reproduced by irradiating the blue light beam Lb that has the same wavelength as the blue light beam to be irradiated to the BD medium 100b. Namely, for the voluminal medium 100v, the red light beam Lr for the DVD medium 100d and the blue light beam Lb for the BD medium 100b can be used as they are. Thus, an optical information recording medium making it possible to use one optical pickup in common with conventional optical disks can be realized.

The optical pickup 10 of the optical disk drive 1 includes the movable lens 34, which can drive a collimator lens, in place of a component of a conventional optical pickup that irradiates the blue light beam Lb to the BD medium 100b by displacing the objective lens unit 20, and irradiates the red light beam Lr to the DVD medium 100d. The optical pickup 10 irradiates the red light beam Lr to the voluminal medium 100v in the same manner as it does to the DVD medium 100d, drives the objective lens unit 20, and focuses the red light beam Lr on the servo layer 114v.

Concurrently, the optical pickup 10 irradiates the blue light beam Lb to the voluminal medium 100v in the same manner as it does to the BD medium 100b while squaring the focus Fb of the blue light beam Lb with a target depth by displacing the movable lens 34. Accordingly, the optical pickup 10 can use one optical path in common as the optical path along which the blue light beam Lb and red light beam Lr are irradiated to the BD medium 100b and DVD medium 100d respectively and the optical path along which the blue light beam Lb and red light beam Lr are irradiated to the voluminal medium 100v. Thus, a voluminal information recording medium making it possible to use the same optical pickup in common with conventional optical disks, and an information recording apparatus, an information reproducing apparatus, and an optical pickup capable of recording or reproducing information in or from both the conventional optical disks and voluminal recording medium can be realized.

### (2) Second Embodiment

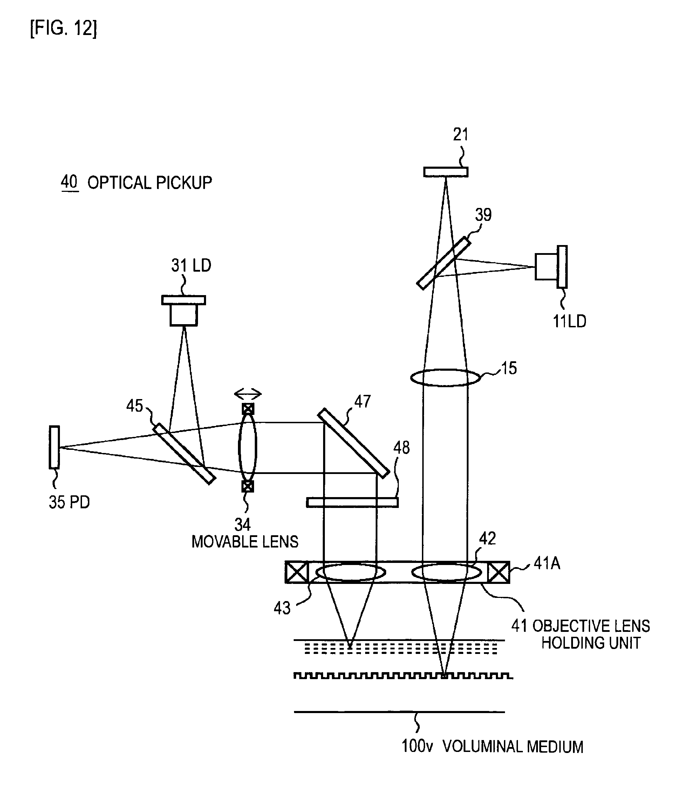

Fig. 12 shows the second embodiment. Components identical to those included in the first embodiment and shown in Fig. 1 to Fig. 11 bear the same reference numerals. Since the configuration of an optical disk drive 1X is identical to that in the first embodiment, an iterative description will be omitted. The second embodiment is different from the first embodiment in points that an optical pickup 40 in accordance with the second embodiment includes two objective lenses 42 and 43, and that the red light beam Lr is concentrated by the objective lens 42 and the blue light beam Lb is concentrated by the objective lens 43.

### (2-1) Irradiation of the red light beam

The laser diode 11 of the optical pickup 40 emits the red light beam Lr under the control of the control unit 2, and routes the light beam to the beam splitter 39. The beam splitter 39 transmits and reflects the red light beam Lr at a predetermined ratio, that is, reflects part of the red light beam Lr and routes the part of the red light beam to the collimator lens 15.

The collimator lens 15 converts the red light beam Lr, which is composed of diverging rays, into parallel rays, and routes the resultant light beam to the objective lens 42 exhibiting a numerical aperture of approximately 0.6. The objective lens 42 concentrates the red light beam Lr, and irradiates the red light beam to the signal recording layer 101d of the DVD medium 100d or the servo layer 114v of the voluminal medium 100v. At this time, the objective lens 42 is displaced while being driven by an actuator 41A, whereby the red light beam Lr is focused on the signal recording layer 101d or servo layer 114v.

The objective lens 42 receives the red reflected light beam LRr which has the red light beam Lr reflected from the signal recording layer 101d or servo layer 114v, and irradiates the light beam to the photodetector 21 via the beam splitter 39.

### (2-2) Irradiation of the blue light beam

The laser diode 31 of the optical pickup 40 emits the blue light beam Lb under the control of the control unit 2, and routes the light beam to the beam splitter 45. The beam splitter 45 transmits the blue light beam Lb at a predetermined ratio, and routes the light beam to the movable lens 34.

The movable lens 34 varies the converging state of the blue light beam Lb according to the distance from the laser diode 31, and routes the light beam to a mirror 47. The mirror 47 reflects the blue light beam Lb, and changes the advancing direction by 90° so that the light beam will enter a liquid crystal element 48.

The liquid crystal element 48 applies a spherical aberration to the blue light beam Lb according to the position of the movable lens 34, and routes the blue light beam Lb to the objective lens 43. The objective lens 43 concentrates the blue light beam Lb, and irradiates the light beam to the signal recording layer 101b of the BD medium 100b or the three-dimensional mark recording layer 111v of the voluminal medium 100v.

As mentioned above, the focus Fb of the blue light beam Lb is determined with the distance of the movable lens 34 from the laser diode 31. In the optical pickup 40, not only when the blue light beam Lb is irradiated to the voluminal medium 100v but also when the blue light beam Lb is irradiated to the BD medium 100b, the movable lens 34 is displaced in order to focus the blue light beam Lb on the signal recording layer 101b that is an object of irradiation.

Now, the objective lens 42 that concentrates the red light beam Lr and the objective lens 43 that concentrates the blue light beam Lb are held in an objective lens holding unit 41, and the positional relationship between the objective lenses 42 and 43 is fixed. The positions of the objective lenses 42 and 43 are determined so that the blue light beam Lb and red light beam Lr will be irradiated with the focus Fb of the blue light beam Lb and the focus Fr of the red light beam Lr separated from each other by a predetermined number of tracks on the servo layer 114v.

Specifically, when the objective lens 42 is displaced while being driven by the actuator 41A, the objective lens 43 is also displaced. Along with the shift of the focus Fr of the red light beam Lr, the focus Fb of the blue light beam Lb is shifted.

Therefore, in the optical pickup 40, when information is recorded or reproduced in or from the voluminal medium 100v, a blue light beam Lb1 is irradiated via the objective lens 43 with the red light beam Lr focused on the servo layer 114v. Thus, the tracking direction of the focus Fb of the blue light beam Lb1 is squared with a target mark position. Further, in the optical pickup 40, the depth d of the focus Fb is adjusted based on the position of the movable lens 34 with the red light beam Lr focused on the servo layer 114v. Thus, the focusing direction of the focus Fb is squared with the target mark position.

In the optical pickup 40, the light intensities of the red light beam Lr and blue light beam Lb emitted from the laser diodes 11 and 31 respectively are managed using rear monitors (not shown) included in the laser diodes 11 and 31 respectively.

As mentioned above, in the optical pickup 40, the blue light beam Lb and red light beam Lr are irradiated from the objective lenses 42 and 43 respectively to the optical disk 100. At this time, in the optical pickup 40, by fixing the positional relationship between the objective lenses 42 and 43, a target mark position for the blue light beam Lb can be determined with the servo layer 114v as a reference. Focus control and tracking control can be implemented in the same manner as they are in the first embodiment.

### (2-3) Actions and advantage

In the foregoing constitution, the optical pickup 40 of the optical disk drive 1X uses the objective lens 43 serving as a first objective lens to concentrate the blue light beam Lb, and uses the objective lens 42, which serves as a second objective lens and exhibits a different numerical aperture from the objective lens 43 does, to concentrate second light. Further, the optical pickup 40 uses the objective lens holding unit 41, which serves as a lens holding unit, to hold the objective lenses 42 and 43 with the positional relationship of the objective lenses 42 and 43 fixed.

Eventually, the optical pickup 40 focuses the red light beam Lr, which is irradiated through the objective lens 42, on the servo layer 114v, and irradiates the blue light beam Lb to an arbitrary target mark position by displacing the movable lens 34 so that the focus Fb of the blue light beam Lb will be separated from the servo layer 114v by an arbitrary depth.

For recording or reproducing information in or from the BD medium 100b, the optical pickup 40 displaces the movable lens 34 in the same manner as it does for recording or reproducing information in or from the voluminal medium 100v. Therefore, in the optical pickup 40, a spherical aberration can be corrected by implementing control so that an arbitrary voltage will be applied to the liquid crystal element 48 according to the distance of the signal recording layer 101b or a target mark position from the incident surface 100vA which is determined with the position of the movable lens 34.

For recording or reproducing information in or from the BD medium 100b or voluminal medium 100v, the optical pickup 40 controls the liquid crystal element 48 in the same manner. Thus, the control of the liquid crystal element 48 can be simplified.

According to the foregoing constitution, even when the red light beam Lr and blue light beam Lb are irradiated through the two objective lenses 42 and 43, as long as the positional relationship between the objective lenses 42 and 43 is fixed, the same advantage as that of the first embodiment can be provided.

### (3) Other Embodiments

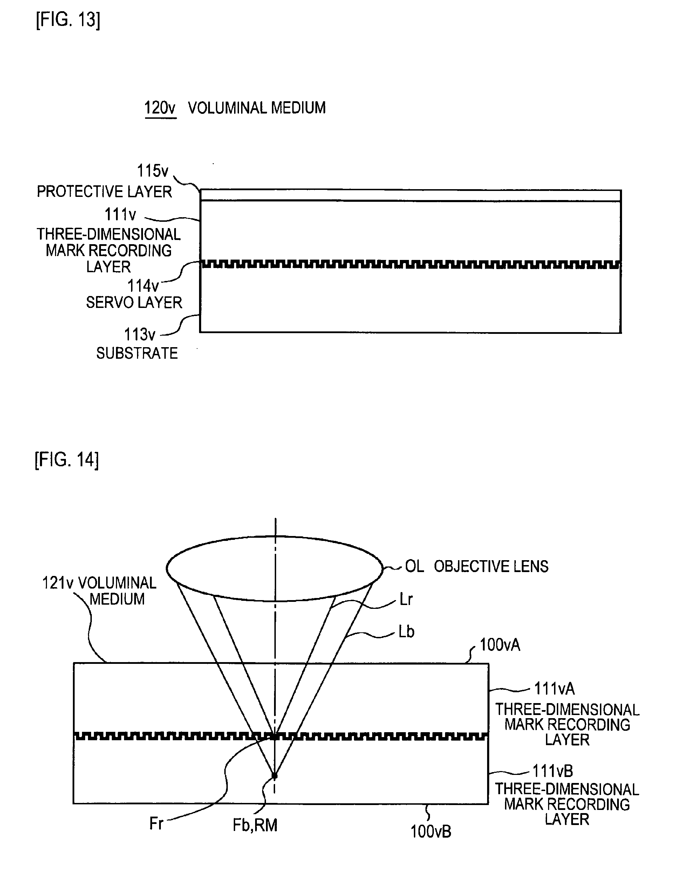

In the aforesaid embodiments, a description has been made of a case where the three-dimensional mark recording layer 111v forms the incident surface 100vA. The present invention is not limited to this case. For example, as shown in Fig. 13, a protective layer 115v forming the incident surface 100vA may be disposed on the three-dimensional mark recording layer 111v. The protective layer 115v is disposed by performing, for example, bonding or spin coating. Thus, the voluminal medium 120v has the incident surface 100vA formed to be hardly flawed.

In the aforesaid embodiments, a description has been made of a case where the three-dimensional mark recording layer 111v is disposed on the side of the incident surface 100vA. The present invention is not limited to this case. For example, the three-dimensional mark recording layer 111v may be disposed on the side of the back surface 100vB. As shown in Fig. 14, two three-dimensional mark recording layers may be disposed on both sides of the servo layer 114v.

In this case, a voluminal medium 121v may have the blue light beam Lb irradiated to the three-dimensional mark recording layer 111vB on the side of the back surface 100vB thereof beyond the servo layer 114v. The voluminal medium 121v may be placed upside down, so that the blue light beam Lb will be irradiated to only the three-dimensional mark recording layer 111vA disposed on the side of the incident surface 100vA beyond the servo layer 114v.

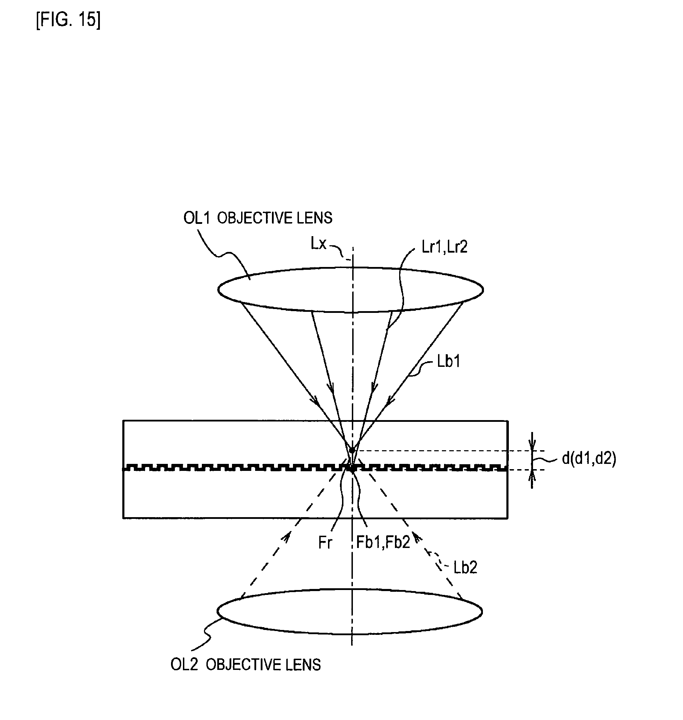

Further, in the aforesaid embodiments, a description has been made of a case where when the blue light beam Lb is irradiated through one side of the voluminal medium 121v, the record mark RM is formed with a bubble in the vicinity of the focus Fb. The present invention is not limited to this case. For example, a reflectance in the vicinity of the focus Fb can be varied depending on optical reaction or thermal reaction. The record mark may be formed by breaking a hologram, which is formed in advance in the voluminal medium, along with irradiation of a light beam. Further, as shown in Fig. 15, the blue light beam Lb emitted from one light source may be separated into blue light beams Lb1 and Lb2, and the blue light beams Lb1 and Lb2 may be irradiated to the same target mark position through both the sides of the voluminal medium 121v in order to form the record mark RM based on the hologram. The configuration of the optical disk drive is described in the aforesaid patent document 1. In the optical disk drive, information recording processing or information reproducing processing can be executed for the DVD medium 100d by irradiating a red light beam alone, and information recording processing or information reproducing processing can be executed for the BD medium 100b by irradiating a blue light beam through one of the sides of the BD medium.

Further, in the aforesaid embodiments, a description has been made of a case where the objective lens unit 20 serving as a light irradiation unit is formed with a combination of the diffraction element 25 and objective lens 26. The present invention is not limited to this case. For example, an optical element other than the diffraction element may be combined with the objective lens 26, or the objective lens 26 alone may be used to form the light irradiation unit.

Further, in the aforesaid embodiment, a description has been made of a case where the optical pickup 10 records or reproduces information in or from the BD medium 100b and DVD medium 100d regarded as conventional optical disc. The present invention is not limited to this case. For example, as the conventional optical disks, in addition to the BD medium 100b and DVD medium 100d, a CD medium 100c conformable to a compact disk (CD) method may be adopted in order to reproduce information. Even in this case, similarly to the first embodiment, when the movable lens 34 is disposed on the optical path for the blue light beam Lb, a conventional optical pickup can be used in common without the necessity of greatly modifying the configuration of the conventional optical pickup.

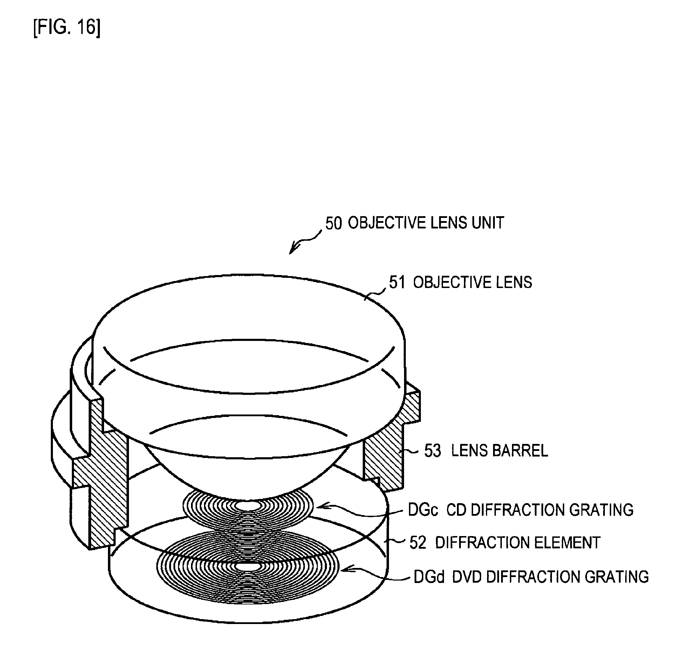

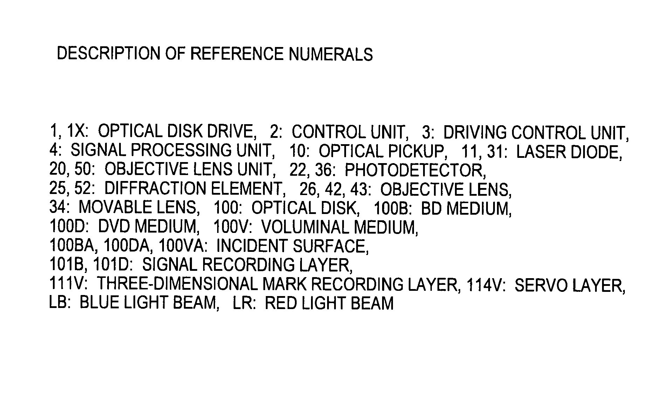

More particularly, for example, as shown in Fig. 16, an objective lens unit 50 formed with a combination of a diffraction element 52 and an objective lens 51 optimized for the BD medium 100b (that is, exhibiting a numerical aperture of approximately 0.85) may be employed. The diffraction element 52 has a DVD diffraction grating DGd, which diffracts the red light beam Lr to be irradiated to the DVD medium 100d, disposed on one side thereof, and has a CD diffraction grating DGc, which diffracts an infrared light beam Lc to be irradiated to the CD medium 100c, disposed on the other side thereof.

The DVD diffraction grating DGd applies a spherical aberration to the red light beam Lr, whereby the objective lens 51 acts as a lens exhibiting a numerical aperture of approximately 0.6. The CD diffraction grating DGc applies a spherical aberration to the infrared light beam Lc, whereby the objective lens 51 acts as a lens exhibiting a numerical aperture of approximately 0.45. Incidentally, the diffraction element and the configuration of the optical pickup are described in patent document 2.
The patent document 2 refers to JP-A-2007-273013.

Further, in the aforesaid embodiments, a description has been made of a case where the total thickness t1 of the voluminal medium 100v is approximately 1.2 mm. The present invention is not limited to this case. The total thickness may be set to any of other various values.

Further, in the aforesaid embodiments, a description has been made of a case where guide grooves are formed with grooves and lands in the servo layer 114v. The present invention is not limited to this case. For example, positional information may be recorded in the servo layer 114v with a pit, which is formed with convex and concave parts, or according to any other method.

Further, in the aforesaid embodiments, a description has been made of a case where the red light beam having a wavelength of approximately 660 nm is irradiated to the servo layer 114v. The present invention is not limited to this case. For example, an infrared light beam Lc having a wavelength of 780 nm may be irradiated to the servo layer 114v. In this case, the distance t11v from the incident surface 100vA of the voluminal medium 100v to the servo layer 114v is, similarly to the distance to the CD medium 100c, set to 1.2 mm.

Further, in the aforesaid embodiments, a description has been made of a case where the movable lens 34 is disposed among diverging rays. The present invention is not limited to this case. The movable lens 34 may be disposed among converging rays. A so-called relay lens that is a combination of a stationary lens, which causes the blue light beam Lb to diverge or converge, and the movable lens 34 that moves in the light-axis direction of the blue light beam Lb may be disposed among parallel rays.

Further, in the aforesaid embodiments, a description has been made of a case where the wavelength of the blue light beam Lb for use in recording or reproducing information is shorter than that of the red light beam Lr to be irradiated to the servo layer 114v. The present invention is not limited to this case. The wavelength of a light beam for use in recording or reproducing information may be longer than the wavelength of a light beam to be irradiated to the servo layer 114v.

Further, in the aforesaid embodiments, a description has been made of a case where the three-dimensional mark recording layer 111v serving as a recording layer and the servo layer 114v serving as a reflecting layer constitute the voluminal medium 100v serving as an optical information recording medium. The present invention is not limited to this case. The recording layer and reflecting layer formed with other various components may be used to constitute the optical information recording medium in accordance with the present invention.

Further, in the aforesaid embodiments, a description has been made of a case where the objective lens unit 20 serving as a light irradiation unit, the biaxial actuator 20A serving as a drive unit, the movable lens 34 serving as a focus shift unit, and the control unit 2 serving as a control unit constitute an optical disk drive 1 serving as an optical information recording apparatus and an optical information reproducing apparatus. The present invention is not limited to this case. The light irradiation unit, drive unit, focus shift unit, and control unit which are realized with other various components may be used to constitute the optical information recording apparatus and optical information reproducing apparatus in accordance with the present invention.

Further, in the aforesaid embodiments, a description has been made of a case where the objective lens unit 20 serving as a light irradiation unit, the biaxial actuator 20A serving as a drive unit, and the movable lens 34 serving as a focus shift unit constitute the optical pickup 10 serving as an optical pickup. The present invention is not limited to this case. The light irradiation unit, drive unit, and focus shift unit which are realized with other various components may be used to constitute the optical pickup in accordance with the present invention.

### Industrial Applicability

An optical information recording medium, and an optical information recording apparatus and an optical information reproducing apparatus in accordance with the present invention can be applied to, for example, an optical disk drive that has a large capacity and can record or reproduce information.

## Claims

1. A voluminal recording medium comprising:
a recording layer in which information is recorded by forming a three-dimensional record mark in the vicinity of the focus of first light according to the first light that is concentrated and has a light intensity equal to or larger than a predetermined intensity, and from which the information is reproduced based on returned light deriving from irradiation of the first light; and
a reflecting layer that reflects at least part of second light which is irradiated in order to square the position of the first light in the recording layer with an arbitrary position and whose wavelength is different from that of the first light, and that is separated in the light-axis direction of the second light from the incident surface of the voluminal recording medium, to which the second light is routed, by the same distance as a distance from an incident surface of an optical information recording medium, which is compatible with the second light, to a signal recording layer.

2. The voluminal recording medium according to Claim 1, wherein the distance from the incident surface of the optical information recording medium compatible with the second light to the signal recording layer is approximately 0.6 mm.

3. The voluminal recording medium according to Claim 2, wherein the thickness from the incident surface to a back surface opposite to the incident surface is approximately 1.2 mm.

4. The voluminal recording medium according to Claim 3, wherein the reflecting layer has guide gloves or concave and convex parts for indicating positions in the reflecting layer.

5. The voluminal recording medium according to Claim 4, wherein two recording layers are disposed on the sides of the incident surface and back surface with the reflecting layer between them.

6. The voluminal recording medium according to Claim 3, wherein a protective layer for protecting the recording layer is disposed on the recording layer.

7. The voluminal recording medium according to Claim 1, wherein the recording layer has a record mark formed with a bubble.

8. The voluminal recording medium according to Claim 1, wherein the recording layer has a record mark formed with a hologram.

9. An information recording apparatus comprising:
a light irradiation unit that concentrates first light and second light whose wavelength is different from that of the first light, and irradiates the first light and second light to optical information recording media;
a drive unit that drives the light irradiation unit in a depth direction, in which the light irradiation unit approaches to or recedes from the optical information recording media, so as to move the first light and second light in the depth direction;
a focus shift unit that shifts the focus of the first light in the depth direction by varying the converging state of the first light; and
a control unit that controls the drive unit and focus shift unit to focus the first light and second light on positions to which the first light and second light should be irradiated, wherein
for a first optical information recording medium, which has a first signal recording layer compatible with the first light, out of the optical information recording media, the control unit focuses the first light on the first signal recording layer according to light returned from the first signal recording layer;
for a second optical recording medium, which has a second signal recording layer compatible with the second light, out of the optical information recording media, the control unit focuses the second light on the second signal recording layer according to light returned from the second signal recording layer;
for a voluminal recording medium, which has a reflecting layer that reflects at least part of the second light and in which information is recorded as a three-dimensional record mark when the first light whose light intensity is equal to or larger than a predetermined intensity is irradiated thereto, out of the optical information recording media, the control unit controls the drive unit to focus the second light on the reflecting layer according to light returned from the reflecting layer, and controls the focus shift unit to shift the focus of the first light in the depth direction so as to thus focus the first light on a target depth to which the first light should be irradiated.

10. The information recording apparatus according to Claim 9, wherein the light irradiation unit is formed with a combination of:
an objective lens; and
a diffraction element that is disposed in a stage preceding the objective lens, varies the spherical aberration of the first light or second light or the spherical aberrations of the first light and second light according to the wavelengths of the first light and second light, and thus differentiates the numerical aperture of the objective lens, which is exhibited when the first light is routed to the objective lens, from the numerical aperture of the objective lens exhibited when the second light is routed to the objective lens.

11. The information recording apparatus according to Claim 10, wherein the focus shift unit is formed with a movable lens that varies the converging state of the first light by displacing the first light in the light-axis direction.

12. The information recording apparatus according to Claim 9, wherein the light irradiation unit includes:
a first objective lens that concentrates the first light;
a second objective lens that concentrates the second light and exhibits a numerical aperture different from the first objective lens does; and
a lens holding unit that holds the first and second objective lenses with the positional relationship between the first and second objective lenses fixed.

13. The information recording apparatus according to Claim 9, wherein the wavelength of the first light is shorter than that of the second light.

14. The information recording apparatus according to Claim 9, wherein the first optical information recording medium is a Blu-ray Disc (BD) (registered trademark), and the second optical information recording medium is a digital versatile disc (DVD).

15. An information reproducing apparatus comprising:
a light irradiation unit that concentrates and irradiates first light and second light whose wavelength is different from that of the first light;
a drive unit that drives the light irradiation unit in a depth direction, in which the light irradiation unit approaches to or recedes from an optical information recording medium, so as to move the first light and second light in the depth direction;
a focus shift unit that shifts the focus of the first light in the depth direction by varying the converging state of the first light; and
a control unit that controls the drive unit and focus shift unit to focus the first light and second light on positions to which the first light and second light should be irradiated, wherein
for a first optical information recording medium having a first signal recording layer compatible with the first light, the control unit focuses the first light on the first signal recording layer according to light returned from the first signal recording layer;
for a second optical information recording medium having the second signal recording layer compatible with the second light, the control unit focuses the second light on the second signal recording layer according to light returned from the second signal recording layer; and
for a voluminal recording medium which has a reflecting layer that reflects at least part of the second light and in which information is recorded as a three-dimensional record mark when the first light whose intensity is equal to or larger than a predetermined intensity is irradiated thereto, the control unit controls the drive unit to focus the second light on the reflecting layer according to light returned from the reflecting layer, and controls the focus shift unit to shift the focus of the first light in the depth direction so as to thus focus the first light on a target depth to which the first light should be irradiated.

16. An optical pickup comprising:
a light irradiation unit that concentrates and irradiates first light and second light whose wavelength is different from that of the first light;
a drive unit that drives the light irradiation unit in a depth direction, in which the light irradiation unit approaches to or recedes from an optical information recording medium, so as to move the first light and second light in the depth direction; and
a focus shift unit that shifts the focus of the first light in the depth direction by varying the converging state of the first light, wherein
for a first optical information recording medium having a first signal recording layer compatible with the first light, the drive unit, the focus shift unit, or the drive unit and focus shift unit focus the first light on the first signal recording layer according to light returned from the first signal recording layer;
for a second optical information recording medium having a second signal recording layer compatible with the second light, the drive unit, the focus shift unit, or the drive unit and focus shift unit focus the second light on the second signal recording layer according to light returned from the second signal recording layer; and
for a voluminal recording medium which has a reflecting layer that reflects at least part of the second light and in which information is recorded as a three-dimensional record mark when the first light whose intensity is equal to or larger than a predetermined intensity is irradiated thereto, the drive unit, the focus shift unit, or the drive unit and focus shift unit control the drive unit to focus the second light on the reflecting layer according to light returned from the reflecting layer, and control the focus shift unit to shift the focus of the first light in the depth direction so as to thus focus the first light on a target depth to which the first light should be irradiated.

## Amended claims

### Amended claims under Art. 19.1 PCT

**1.** (amended) A voluminal recording medium comprising:
a recording layer in which information is recorded by forming a record mark with a bubble in the vicinity of the focus of first light according to the first light that is concentrated and has a light intensity equal to or larger than a predetermined intensity, and from which the information is reproduced based on returned light deriving from irradiation of the first light; and
a reflecting layer that reflects at least part of second light which is irradiated in order to square the position of the first light in the recording layer with an arbitrary position and whose wavelength is different from that of the first light, and that is separated in the light-axis direction of the second light from the incident surface of the voluminal recording medium, to which the second light is routed, by the same distance as a distance from an incident surface of an optical information recording medium compatible with the second light to a signal recording layer.

**2.** The voluminal recording medium according to Claim 1, wherein the distance from the incident surface of the optical information recording medium compatible with the second light to the signal recording layer is approximately 0.6 mm.

**3.** The voluminal recording medium according to Claim 2, wherein the thickness from the incident surface to a back surface opposite to the incident surface is approximately 1.2 mm.

**4.** The voluminal recording medium according to Claim 3, wherein the reflecting layer has guide grooves or concave and convex parts for indicating positions in the reflecting layer.

**5.** The voluminal recording medium according to Claim 4, wherein two recording layers are disposed on the sides of the incident surface and back surface respectively with the reflecting layer between them.

**6.** The voluminal recording medium according to Claim 3, further comprising a protective layer that is disposed on the recording layer in order to protect the recording layer.

**7.** (amended) An information recording apparatus comprising:
a light irradiation unit that concentrates first light and second light whose wavelength is different from that of the first light, and irradiates the first light and second light to optical information recording media;
a drive unit that drives the light irradiation unit in a depth direction, in which the light irradiation unit approaches to or recedes from the optical information recording media, so as to move the first light and second light in the depth direction;
a focus shift unit that shifts the focus of the first light in the depth direction by varying the converging state of the first light; and
a control unit that controls the drive unit and focus shift unit to focus the first light and second light on positions to which the first light and second light should be irradiated, wherein
for a first optical information recording medium, which has a first signal recording layer compatible with the first light, out of the optical information recording media, the control unit focuses the first light on the first signal recording layer according to light returned from the first signal recording layer;
for a second optical information recording medium, which includes a second signal recording layer compatible with the second light, out of the optical information recording media, the control unit focuses the second light on the second signal recording layer according to light returned from the second signal recording layer; and
for a voluminal recording medium, which has a reflecting layer that reflects at least part of the second light and in which information is recorded as a three-dimensional record mark when the first light whose intensity is equal to or larger than a predetermined intensity is irradiated thereto, out of the optical information recording media, the control unit controls the drive unit to focus the second light on the reflecting layer according to light returned from the reflecting layer, and controls the focus shift unit to shift the focus of the first light in the depth direction so as to thus focus the first light on a target depth to which the first light should be irradiated.

**8.** (amended) The information recording apparatus according to Claim 7, wherein the light irradiation unit includes a combination of:
an objective lens; and
a diffraction element that is disposed in a stage preceding the objective lens, and varies the first or second light or the spherical aberrations of the first light or second light according to the wavelengths of the first light and second light so as to differentiate the numerical aperture of the objective lens, which is exhibited when the first light is routed to the objective lens, from the numerical aperture of the objective lens exhibited when the second light is routed to the objective lens.

**9.** (amended) The information recording apparatus according to Claim 8, wherein the focus shift unit is formed with a movable lens that is displaced in the light-axis direction of the first light in order to vary the converging state of the first light.

**10.** (amended) The information recording apparatus according to Claim 7, wherein the light irradiation unit includes:
a first objective lens that concentrates the first light;
a second objective lens that concentrates the second light and exhibits a numerical aperture different from the first objective lens does; and
a lens holding unit that holds the first and second objective lenses with the positional relationship between the first and second objective lenses fixed.

**11.** (amended) The information recording apparatus according to Claim 7, wherein the first light has a wavelength shorter than the second light does.

**12.** (amended) The information recording apparatus according to Claim 7, wherein the first optical information recording medium is a Blu-ray Disc (BD) (registered trademark), and the second optical information recording medium is a digital versatile disc (DVD).

**13.** (amended) An information reproducing apparatus comprising:
a light irradiation unit that concentrates and irradiates first light and second light whose wavelength is different from that of the first light;
a drive unit that drives the light irradiation unit in a depth direction, in which the light irradiation unit approaches to or recedes from an optical information recording medium, so as to move the first light and second light in the depth direction;
a focus shift unit that shifts the focus of the first light in the depth direction by varying the converging state of the first light; and
a control unit that controls the drive unit and focus shift unit to focus the first light and second light on positions to which the first light and second light should be irradiated, wherein
for a first optical information recording medium having a first signal recording layer compatible with the first light, the control unit focuses the first light on the first signal recording layer according to light returned from the first signal recording layer;
for a second optical information recording medium having a second signal recording layer compatible with the second light, the control unit focuses the second light on the second signal recording layer according to light returned from the second signal recording layer; and
for a voluminal recording medium which has a reflecting layer that reflects at least part of the second light and in which information is recorded as a three-dimensional record mark when the first light whose intensity is equal to or larger than a predetermined intensity is irradiated thereto, the control unit controls the drive unit to focus the second light on the reflecting layer according to light returned from the reflecting layer, and controls the focus shift unit to shift the focus of the first light in the depth direction so as to thus focus the first light on a target depth to which the first light should be irradiated.

**14.** (amended) An optical pickup comprising:
a light irradiation unit that concentrates and irradiates first light and second light whose wavelength is different from that of the first light;
a drive unit that drives the light irradiation unit in a depth direction, in which the light irradiation unit approaches to or recedes from an optical information recording medium, so as to move the first light and second light in the depth direction; and
a focus shift unit that shifts the focus of the first light in the depth direction by varying the converging state of the first light, wherein
for a first optical information recording medium having a first signal recording layer compatible with the first light, the drive unit, the focus shift unit, or the drive unit and focus shift unit focus the first light on the first signal recording layer according to light returned from the first signal recording layer;
for a second optical information recording medium having a second signal recording layer compatible with the second light, the drive unit, the focus shift unit, or the drive unit and focus shift unit focus the second light on the second signal recording layer according to light returned from the second signal recording layer,
for a voluminal recording medium which has a reflecting layer that reflects at least part of the second light and in which information is recorded as a three-dimensional record mark when the first light whose intensity is equal to or larger than a predetermined intensity is irradiated thereto, the drive unit, the focus shift unit, or the drive unit and focus shift unit control the drive unit to focus the second light on the reflecting layer according to light returned from the reflecting layer, and control the focus shift unit to shift the focus of the first light in the depth direction so as to thus focus the first light on a target depth to which the first light should be irradiated.

**15.** (excluded)

**16.** (excluded)
